# EUROPEAN PATENT APPLICATION

(11) **EP 0 590 641 A1**
(43) Date of publication of application: **06.04.1994**
(21) Application number: 93115727.5
(22) Date of filing: 29.09.1993
(51) Int. Cl.: C02F 1/06, B01D 1/26, B01D 3/00

(54) **Method and device in a multi-stage distilling machine**

(30) Priority: 01.10.1992 FI 924433
(71) Applicant: FINN-AQUA SANTASALO-SOHLBERG OY, SF-04300 Hyrylä (FI)
(72) Inventor: Santasalo, Lauri, SF-00340 Helsinki (FI)
(74) Representative: Tiedtke, Harro, Dipl.-Ing.

(57) **Abstract**

The invention relates to a method and a device for ensuring the sterility of distillate in a multi-stage distilling machine. All feed water of the multi-stage distilling machine is caused to flow through a first column (11) operating at the highest temperature so that the temperature of the feed water is at least 121°C, 131°C, 141°C, respectively, and the delay time thereof is at least 8 min, 0.8 min, 0.08 min, respectively, so that the distillate of every column of the multi-stage distilling machine is sterile, including that of the last column operating at the lowest temperature. The feed water flows through a first flow line (13a) from a second column (12) to the first column (11), from the first column (11) through a second flow line (13b) to a separate heat exchanger (17) and returns through a third flow line (13c) to the first column (11).

## Description

The invention relates to a method of ensuring the sterility of distillate in a multi-stage distilling machine.

The invention also relates to a device for ensuring the sterility of distillate in a multi-stage distilling machine, which distilling machine comprises numerous columns which operate at stepwise different operating temperatures, and which distilling machine comprises a flow line for feed water and a supply line for steam.

A multi-stage distilling machine comprises several columns, usually four, five or six columns. With respect to the state of the art, reference is made to FI Patent 47083, which discloses a multi-stage distilling machine. A stepwise lower distillation temperature prevails in the different columns of the distilling machine, for instance, so that the operating temperature in the first column is about 143°C, in the third column about 125°C, in the fourth column about 120°C, in the fifth column about 110°C and in the sixth or the last column about 100°C.

The U.S. standard GMP (Good Manufacturing Practice) defines the minimum action time of F₀ = 8 min for moist-heat sterilization at a temperature of 121°C. Knowing that the Z-value in moist-heat sterilization is 10°C, F₀ would be 0.8 min at a temperature of 131°C and, in a corresponding manner, 0.08 min at a temperature of 141°C. The above-mentioned numerical values mean that the water to be distilled must be maintained at said temperatures for said minimum times in order to be certain that distillate is definitely sterile.

In respect of the first and the second columns in a multi-stage distilling apparatus it can usually be assured that distillation takes place at temperatures and for times of action that ensure the sterility of distillate. In respect of the last or the second last columns, in which the operating temperature is only about 100°C or 105°C, there is no certain guarantee of the fact that the distillate would be sterile.

The aim of the invention is to provide a method and a device in a multi-stage distilling machine which assure in a simple and reliable manner that the distillate of every column is absolutely sterile.

The objects of the invention are achieved by a method which is characterized in that all feed water of a multi-stage distilling machine is caused to flow through the first column operating at the highest temperature so that the temperature of the feed water is at least 121°C, 131°C, 141°C, respectively, and the delay time thereof is at least 8 min, 0.8 min, 0.08 min, respectively, so that the distillate of every column of the multi-stage distilling machine, including that of the last column operating at the lowest temperature, is sterile.

The device of the invention is characterized in that a heat exchanger has been placed between the column operating at the highest temperature and the succeeding column operating at the second highest temperature, through which heat exchanger all the feed water of the distilling machine has been caused to flow so that the temperature of the feed water is at least 121°C, 131°C, 141°C, respectively, and the delay time thereof is at least 8 min, 0.8 min, 0.08 min, respectively.

In the design of the invention the inventor has realised the possibility to arrange a sufficiently high temperature (usually about 140°C) and a sufficiently long delay time (delay time t ≈ 5 seconds at a temperature of 141°C) in the first column for all the feed water of the multi-stage distilling machine. Owing to this, it can be reliably assured that the distillate of each column of the multi-stage distilling machine, i.e. including that of the last column operating at the lowest temperature, is sterile.

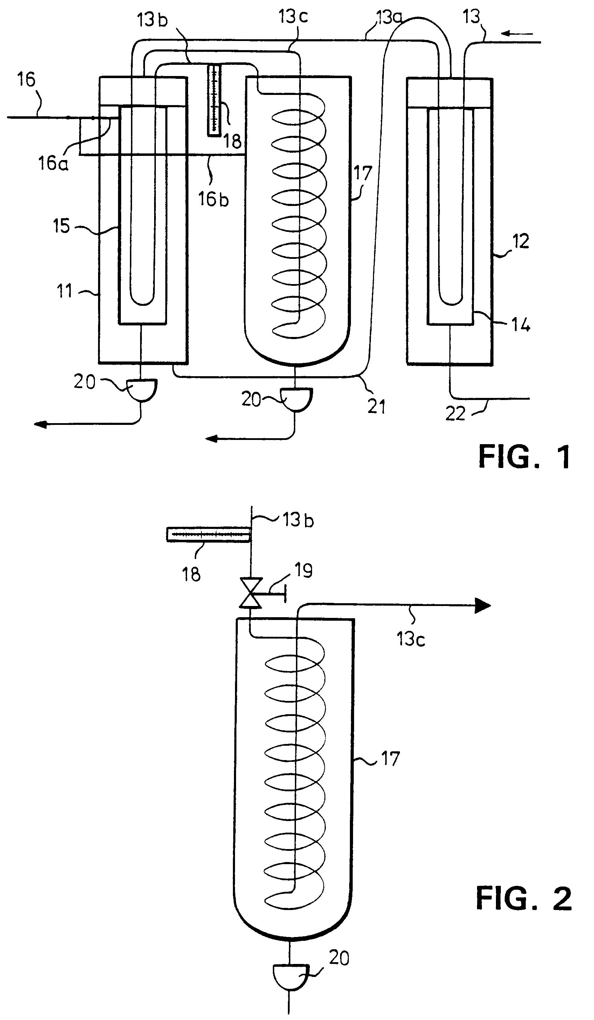

The invention is described in detail with reference to the embodiment shown in Figs. 1 and 2 of the accompanying drawings, to which embodiment the invention is, however, not intended to be exclusively confined.

Fig. 1 is a schematic side view of a first and a second column of a multi-stage distilling machine.

Fig. 2 is a schematic side view of an advantageous embodiment of a heat exchanger according to the invention.

In the embodiment shown in Figs. 1 and 2 the first column of a multi-stage distilling machine is denoted with reference numeral 11 and the second column is denoted with reference numeral 12. Feed water flows through a flow line 13 to the second column 12. The heat exchanger of the second column 12 is denoted with reference numeral 14 and the outlet line of distillate is denoted with reference numeral 22. The feed water flows from the second column 12 through a flow line 13a to the first column 11, the heat exchanger of which is denoted with reference numeral 15. Steam is fed into the first column 11 through a supply line 16. The temperature of the supply steam may be e.g. about 143°C, when pressure is 3 bar.

In accordance with the original basic idea of the invention, the feed water is caused to remain at the operating temperature of the first column for a sufficiently long delay time, so that it can be assured that the water is reliably sterilized. In the embodiment shown in Figs. 1 and 2 this has been accomplished such that a separate heat exchanger 17 has been disposed between the first column 11 and the second column 12, which heat exchanger may be a container, a tube or a nested tubular construction. The steam flows from the steam supply line 16 through a first branch line 16a to the first column 11 and through a second branch line 16b to the separate heat exchanger 17. The feed water flows from the first column 11 through a line 13b to the heat exchanger 17. A thermometer 18 and a flow regulator 19 have been disposed in the flow line 13b. When the thermometer 18 detects the temperature of the feed water in the flow line 13b to be e.g. 131°C, the flow regulator 19 operates so that the feed water stays in the heat exchanger 17 for the required delay time, i.e. 0.8 min = 48 seconds. In the embodiment shown in Figs. 1 and 2 this has been arranged so that the flow line 13b continues in the form of a helical coil in the heat exchanger 17. The feed water is discharged from the heat exchanger 17 through a flow line 13c to the first column 11 in order to be vaporized.

The condensate removers disposed in the column 11 and in the heat exchanger 17 are denoted with reference numeral 20. The feed water unvaporized in the column 11 flows from the column 11 through a flow line 21 to the second column, etc.

Only a special embodiment of the invention has been described in the foregoing. It is obvious to a person skilled in the art that the details of the invention may vary within the inventive idea set forth in the accompanying claims.
The invention relates to a method and a device for ensuring the sterility of distillate in a multi-stage distilling machine. All feed water of the multi-stage distilling machine is caused to flow through a first column (11) operating at the highest temperature so that the temperature of the feed water is at least 121°C, 131°C, 141°C, respectively, and the delay time thereof is at least 8 min, 0.8 min, 0.08 min, respectively, so that the distillate of every column of the multi-stage distilling machine is sterile, including that of the last column operating at the lowest temperature. The feed water flows through a first flow line (13a) from a second column (12) to the first column (11), from the first column (11) through a second flow line (13b) to a separate heat exchanger (17) and returns through a third flow line (13c) to the first column (11).

## Claims

1. A method of ensuring the sterility of distillate in a multi-stage distilling machine, **characterized** in that all feed water of the multi-stage distilling machine is caused to flow through a first column (11) operating at the highest temperature so that the temperature of the feed water is at least 121°C, 131°C, 141°C, respectively, and the delay time thereof is at least 8 min, 0.8 min, 0.08 min, respectively, so that the distillate of every column of the multi-stage distilling machine is sterile, including that of the last column operating at the lowest temperature.

2. A method according to claim 1, **characterized** in that the feed water flows from a second column (12) through a first flow line (13a) to the first column (11), from the first column (11) through a second flow line (13b) to a separate heat exchanger (17) and returns through a third flow line (13c) to the first column (11).

3. A method according to claim 2, **characterized** in that the temperature of the feed water in said second flow line (13b) is at least 131°C and the delay time thereof in said separate heat exchanger (17) is at least 0.8 min.

4. A method according to any one of claims 1 to 3, **characterized** in that steam is fed through a first branch line (16a) to the space of a heat exchanger (15) of the first column (11) and through a second branch line (16b) to said separate heat exchanger (17).

5. A method according to any one of claims 1 to 4, **characterized** in that the temperature of the feed water is measured in said second flow line (13b).

6. A device for ensuring the sterility of distillate of a multi-stage distilling machine, which distilling machine comprises numerous columns (11,12, etc.) which operate at stepwise different operating temperatures, and which distilling machine comprises a flow line (13) for feed water and a supply line (16) for steam, **characterized** in that a heat exchanger (17) has been placed between the column (11) operating at the highest temperature and the succeeding column (12) operating at the second highest temperature, through which heat exchanger all the feed water of the distilling machine has been caused to flow so that the temperature of the feed water is at least 121°C, 131°C, 141°C, respectively, and the delay time thereof is at least 8 min, 0.8 min, 0.08 min, respectively.

7. A device according to claim 6, **characterized** in that the feed water flowing through a first flow line (13a) to said column (11) operating at the highest temperature is in communication from said column (11) to said heat exchanger (17) through a second flow line (13b) and in communication from said heat exchanger (17) to said first column (11) through a third flow line (13c).

8. A device according to claim 6 or 7, **characterized** in that said second flow line (13b) is provided with a thermometer (18) and a flow regulator (19).

9. A device according to any one of claims 6 to 8, **characterized** in that said heat exchanger (17) is a tubular coil fitted in a container.

10. A device according to any one of claims 6 to 8, **characterized** in that the heat exchanger (17) is a nested tubular construction.
